# EUROPEAN PATENT APPLICATION

(11) **EP 3 826 095 A1**
(43) Date of publication of application: **26.05.2021**
(21) Application number: 19211052.6
(22) Date of filing: 22.11.2019
(51) Int. Cl.: H01M 10/054, H01M 4/38, H01M 2/16, H01M 4/58, H01M 4/60, H01M 10/04, H01M 10/0568, H01M 10/0569

(54) **MAGNESIUM SULFUR BATTERY WITH HIGH DISCHARGE CAPACITY**

(71) Applicant: Universität Stuttgart, 70174 Stuttgart (DE)
(72) Inventor: BUCHMEISER, Michael, 73630 Remshaden (DE); WANG, Peiwen, 70563 Stuttgart (DE)
(74) Representative: Held, Stephan

(57) **Abstract**

The invention concerns electrochemical cells comprising a magnesium anode, a cathode based on sulfurated poly(acrylonitrile) (SPAN), a separator and a halogen-free electrolyte comprising a non-halogen lithium salt and a non-halogen magnesium salt in a solvent, wherein the separator and the electrolyte is arranged between the cathode and the anode. Corresponding cells show high discharge capacities of up to 800 mAh/g sulfur at about 100 % coulombic efficiency and high cycle stability. The invention further concerns batteries or battery stacks comprising such electrochemical cells as well as the use of such batteries and battery stack for storing energy and for use in various mobile and stationary applications.

## Description

The invention concerns electrochemical cells comprising a magnesium anode, a cathode based on sulfurated poly(acrylonitrile) (SPAN), a separator and a halogen-free electrolyte comprising a non-halogen lithium salt and a non-halogen magnesium salt in a solvent, wherein the separator and the electrolyte is arranged between the cathode and the anode. The invention further concerns batteries and battery stacks comprising such electrochemical cells as well as the use of such batteries and battery stacks for storing energy and for use in various mobile and stationary applications.

### State of the art

In the present, lithium ion batteries still constitute the state of the art, when it comes to storing electrical energy at a minimum loss and with a lightweight storage system, which can be implemented in mobile devices. Lithium ion batteries e.g. nowadays can be found in almost every mobile phone produced and are also the primary technology for the implementation into electric vehicles. However, lithium in batteries has the disadvantage that it can form dendrites during the deposition/stripping process, which is attributed to be the main cause for the safety issue in lithium batteries and rechargeable lithium batteries.

In addition, manufacture and purification of lithium suitable for implementation into lithium ion batteries is highly energy and water demanding, and some constituents of such batteries such as cobalt are only won in politically unstable regions, which has led to concerns about whether large scale production of lithium batteries over the whole process is ecologically as well as societally acceptable.

Thus, there is a great demand for efficient energy storage materials, which are not dependent on lithium or other necessary constituents for lithium ion batteries.

The magnesium sulfur battery is an emerging energy storage technology, which, due to the high theoretical energy density of both sulfur (1672 mA·h·g⁻¹) and magnesium (3832 mA·h·cm⁻³) compared to lithium (2062 mA·h·cm⁻³) or sodium (1128 mA·h·cm⁻³), is of great interest. In theory, the Mg/S chemistry can provide 1722 Wh/kg energy density with an open circuit voltage at ∼1.7 V. Magnesium, in comparison to other non-lithium battery materials, has the further advantage that it is abundant, non-toxic and does not rapidly degrade in air.

At the same time, magnesium has been reported to plate in a non-dendritic manner, which translates into higher safety characteristics in commercial applications (see e.g. T. Gao et al. Angew. Chem. 2017, 129, pp. 13711-13715 or Angew. Chem. Int. Ed. 2017, 56, pp. 13526-13530). Despite of these promising features, research activities on Mg-S batteries are so far quite limited, which is in stark contrast to e.g. the Li-S battery technology.

From among the electrolytes, which have heretofore been described as suitable for use in Mg/S-batteries, the majority comprises Al-, B- or Y-based Lewis acids together with a magnesium-derived Lewis base prepared via a transmetalation reaction. E.g. H. Kim et al in Nat. Commun. 2011, 427, pp. 1-6 describe [Mg₂Cl₃·6THF][HMDSAlCl₃] as the electrolyte, wherein the HMDSAlCl₃⁻ is generated from the corresponding HMDSMgCl and AlCl₃.

Z. Zhao-Karger et al., ACS Energy Lett. 2018, 3, pp. 2005-2013 describe magnesium tetrakis(hexafluoroisopropyloxy) borate (Mg[B(hfip)₄]₂ as an electrolyte, which is generated from Mg(BH₄)₂ by reaction with HOCH(CF₃)₂. Notably, the use of magnesium trifluoromethanesulfonate, Mg(CF₃SO₃)₂, alone results in poor electrochemical performance while the combination of Mg(CF₃SO₃)₂ with AlCl₃, MgCl₂, anthracene or LiCl was observed to provide better reversibility and discharge capacities (see I. Shterenberg et al M, J. Electrochem. Soc. 2015, 162, pp. A7118-A7128, S. Y. Ha et al, ACS Appl. Mater. Interf. 2014, 6, pp. 4063-4073, or Y. Yang et al. ACS Appl. Mater. Interf. 2019, 11, pp. 9062-9072). However, most halogen-containing electrolytes have turned out to be corrosive, which significantly reduces the use time of corresponding batteries.

In addition, various cathode materials including porous, conductive, high surface area carbon additives including carbon black (see e.g. H. Kim et al, Nat. Commun. 2011, 427, pp. 1-6 or CN1096870727A, 2019), nitrogen-doped graphene (see e.g. W. Li et al. Angew. Chem. 2016, 128, pp. 6516-6520 or Angew. Chem. Int. Ed. 2016, 55, pp. 6406-6410), carbon nanotubes (see e.g. A. Du et al. Energ. Environ. Sci. 2017, 10, pp. 2616-2625), carbon nanofibers (see e.g. X. Yu et al. ACS Energy Lett. 2016, 1, pp. 431-437, or CN107910535A, 2018), activated carbon clothes (see e.g. T. Gao et al. J. Am. Chem. Soc. 2015, 137, pp. 12388-12393), microporous carbon (see e.g. W. Q. Wang et al. J. Phys. Chem. C 2018, 122, pp. 26764-26776), reduced graphene oxide (see e.g. B. P. Vinayan et al. Nanoscale 2016, 8, pp. 3296-3306), graphdiyne (see e.g. A. Du et al. Energ. Environ. Sci. 2017, 10, pp. 2616-2625), microporous carbon (see e.g. W. Q. Wang et al. J. Phys. Chem. C 2018, 122, pp. 26764-26776.) and metal organic frameworks (see e.g. X. Zhou et al. Adv. Mater. 2018, 30, 17041669) have been used to accommodate the sulfur.

Generally, these carbonaceous materials are designed such that the final composite possesses high electrical conductivity and a good interaction with both the sulfur and the polysulfides to improve the utilization of active material and to reduce the diffusion of polysulfides. At the same time, it should display substantial mechanical stability to uphold the volume change caused by the reduction and oxidation of sulfur during cycling. Finally, the electrolyte should easily migrate into the cathode material (see B. P. Vinayan et al. Nanoscale 2016, 8, pp. 3296-3306).

In the recent past, Wang et al. and Buchmeiser et al. have developed sulfurated poly(acrylonitrile) ("SPAN") as a promising cathode material for lithium-sulfur batteries (see L. Wang et al. Electrochim. Acta 2012, 72, pp. 114-119; J. Fanous et al. J. Electrochem. Soc. 2013, 160, pp. A1169-A1170, and J. Fanous et al. J. Mater. Chem. 2012, 22, 23240-23245). The most important feature of SPAN is that the sulfur is not physisorbed to the polymeric PAN material, but is chemically bound to the polymer, presumably via vinylogous/phenylogous enolic thioamides, which allows for the formation of intra- and intermolecular polymer-Sₓ-polymer chains with 2 ≤ x ≤ 8. It is this special bonding of the thioamide in its enolate form, that distinguishes SPAN from most other S-based cathodes. In fact, the anionic enolic thioamides or pyrid-2-ylthiolates serve as "docking stations" for sulfides during charging, which results in the reformation of the above-mentioned oligomeric sulfur chains attached to the polymeric backbone. In due consequence, SPAN allows for a poly(sulfide) shuttle-free cycling of cells up to discharge/charge rates of 8C for more than 1100 cycles with an overall loss of <10%.

Due to the superior properties of the SPAN cathode, the application of SPAN in Mg-S batteries is of great interest. A first report, however, did not result in a cycle-stable Mg-S battery (see Y. NuLi et al. Electrochem. Commun. 2007, 9, pp. 1913-1917).

Based on the above, there was a need in the art for Mg-S batteries, which have improved cycle-stability, do not suffer from corrosion problems due to the electrolyte used and which show high discharge capacities to thus enable the production of effective and long-term stable batteries. The present application addresses these needs.

### Description of the invention

In the investigations underlying the invention, it has now unexpectedly been found that the above indicated benefits can be achieved with an electrochemical cell, which is based on magnesium-sulfur chemistry, wherein the anode is based on magnesium, the cathode is based on SPAN and the electrolyte is halogen free and comprises Mg and Li as cationic constituents thereof. Such cells have been found to show high discharge capacities > 800 mAh/g_{sulfur}, about 100% Coulombic efficiency, high cycle stability over at least 200 cycles and good rate capacity.

Accordingly, a first aspect of the present invention is directed at an electrochemical cell comprising a magnesium anode, a cathode based on sulfurated poly(acrylonitrile) (SPAN), a separator and a halogen-free electrolyte comprising a non-halogen lithium salt and a non-halogen magnesium salt in a solvent, wherein the separator and the electrolyte is arranged between the cathode and the anode.

The term "non-halogen" in this connection means, that the salt do not comprise halogens as the respective counter ions and preferably also do not contain halogen atoms, which are covalently bonded to other atoms in the counter ion. The term "halogen-free" intends to indicate that the electrolyte does not contain halogens in ionic and elemental form and preferably also does not contain halogens, which are covalently bonded to constituents of the electrolyte, except for unavoidable impurities.

The separator is to separate the cathode and anode from each other to prevent short circuits, but on the other had must allow for ions in the electrolyte to move from the anode to the cathode. Thus, the separator must be ion permeable or ion conductive. In addition, the separator is preferably chemically inert towards the electrolyte, cathode and anode, to which is can come into contact.

With regard to the electrolyte, it is further noted that lithium as a further ion in the electrolyte in the context of this application was found to be a crucial constituent to provide for the required high discharge capacity.

Concerning the anions in the electrolyte, there are no particularly relevant restrictions except that the anions have to be non-halogen anions as indicated above. In addition, for weight considerations of the resulting electrochemical cell, the weight of the anions should preferably be as low as possible, such as in particular equal to or less than 250 g/mol, preferably equal to or less than 200 g/mol, more preferably equal to or less than 150 g/mol and even more preferably equal to or less 100 g/mol.

Borates with alkyl, alkoxy and hydrogen substituents have been identified as a particularly useful class of anions in the practice of the invention, wherefrom tetraalkylborates and borohydrides are preferred. Thus, in a preferred embodiment, the anion of either of the non-halogen magnesium or non-halogen lithium salt is a tetraalkylborate or borohydride. A tetraalkylborate designates a tetracoordinated boron having four alkyl substituents coordinated thereto, which may be same or different. Preferably the alkyl groups in the tetraalkylborates are the same and/or are selected from C₁₋₆-alkyl such as methyl, ethyl, propyl or butyl. A "borohydride", as this term is used in this application, designates a tetracoordinated boron having at least one hydrogen atom directly attached thereto. In a preferred embodiment, the borohydride is selected from borohydrides of the type [BHR¹R²R³]⁻, wherein R¹, R² and R³ may be same or different and is selected from H, alkyl, preferably C₁₋₆-alkyl (e.g. methyl, ethyl, propyl, butyl), or alkoxy, preferably C₁₋₆-alkoxy (e.g. methoxy, ethoxy, propoxy, butoxy) or phenyl. Since [BH₄]⁻ is the most readily available and has the lowest molecular weight, the anion of either of the non-halogen magnesium or non-halogen lithium salt is preferably [BH₄]⁻; in this case R¹, R² and R³ in the above formula are each H.

For reasons of preparation simplicity, in a preferred embodiment the anion of the non-halogen magnesium salt and non-halogen lithium salt are the same and are particularly preferably borohydrides as described above and most preferably [BH₄]⁴.

With regard to the material, from which the magnesium anode is prepared there are also no relevant restrictions, except that it comprises magnesium in elemental form. Particularly suitable forms of magnesium include foil magnesium, bulk magnesium, pressed magnesium powder, Rieke magnesium, or mixtures of magnesium powder or Rieke magnesium. A highly preferred magnesium anode material is magnesium foil.

If the magnesium anode is prepared from a particulate magnesium precursor such as a powder, it is also possible to incorporate a carbonaceous material thereto. As particularly suitable carbonaceous materials carbon, graphite, graphene, graphene oxide or carbon black or mixtures of two or more of these materials can be mentioned.

The SPAN material in the cathode can have various shapes from among which fibrous SPAN, monolithic SPAN and/or pellicular SPAN are preferred in the invention. If the SPAN is a fibrous SPAN, it is preferred that the fibers have diameters in the range of 0.2 - 200 µm, in particular in the range of 1 - 200 µm, more preferably in the range of 10 to 50 µm and even more preferably in the range of 20 - 40 µm. If the SPAN is a pellicular SPAN, it is preferred that the particles thereof have an average particle diameter of < 500 µm, preferably < 150 µm, and more preferably < 70 µm. While the lower limit of the average particle diameter is of less importance, for completeness it can be preferred in the invention that the average particle diameter is equal to or more than 0.1 µm and preferably equal to or more than 1 µm. The particle size in each case is determined by, e.g. laser light scattering.

The SPAN in the inventive electrochemical cell contains sufficient sulfur to provide the intended loading capacity. However, it is preferred that the SPAN has a sulfur content of 35 - 60 wt.-% and more preferably 38-45 wt.-%. The sulfur content can be determined by elemental analysis.

In addition to SPAN, the cathode can further contain additional materials such as binders and conductive materials. Examples of suitable conductive materials are e.g. the carbonaceous materials, which have been mentioned above as possible constituents of the magnesium anode. A particularly preferred conductive material is carbon black. As suitable binder e.g. poly(vinylidene fluoride) can be mentioned, which is e.g. commercially distributed as Solef 5130 by Solvay Germany.

If the cathode contains additional materials such as binders and conductive materials it is preferred that the SPAN accounts for at least about 50 wt.-% of the total weight of the electrode, more preferably least about 60 wt.-%. As a particularly suitable ratio of SPAN, binder and conductive materials 70±5% : 15±5 % : 15±5 % can be mentioned.

The separator, as indicated above, is permeable or conductive towards the electrolyte metals. Suitable materials for this purpose are e.g. glass, glass fiber or polyolefins. Thus, in a preferred embodiment of the invention, the separator is either of a glass separator, glass fiber separator or polyolefin separator. If the separator is a polyolefin separator, the polyolefin is preferably poly(propylene) (PP).

The solvent in the halogen-free electrolyte is conventionally a solvent, which does not form salts with lithium or magnesium and does not react with the non-halogen lithium salt and non-halogen magnesium salt, which is regularly the case if the solvent is aprotic. If the non-halogen lithium or magnesium salt is a borohydride, in addition the solvent should not comprise functional groups, which can react with borohydride. Since a particularly suitable group of solvents to fulfil these requirements are ethers and polyethers, the solvent in the inventive halogen-free electrolyte is preferably an ether and polyether. In a particularly preferred embodiment, the solvent is a polyether selected from 1,2-dimethoxyethane, diglyme, triglyme, tetraglyme, 1,3-dioxolane and 1,4-dioxane, as well as mixtures of two or more of these polyethers.

The concentration of the non-halogen magnesium salt in the halogen-free electrolyte can be varied in relative broad ranges, wherefrom, however, concentrations in the range of 0.01 - 5 mol/L and especially in the range of 0.05 - 0.2 mol/L are preferred in this invention.

Similarly, the concentration of the non-halogen lithium salt in the halogen-free electrolyte can be varied in broad ranges, wherefrom concentrations in the range of 0.01 - 5 mol/L and especially in the range of 0.5 to 2.0 mol/L are preferred. A particularly preferred concentration of the non-halogen lithium salt is about 1.5 mol/L (± 10%).

As is apparent from the indicated preferred ranges of the concentration of the non-halogen magnesium salt and non-halogen lithium salt, the concentration of the non-halogen lithium salt is preferably higher than that of the magnesium salt, more preferably by a factor of at least two, even more preferably by a factor of at least 5 and even more preferably by a factor of at least 10.

A further aspect of the invention is directed at a battery or battery stack comprising at least one electrochemical cell as described above. In this regard, a battery stack designates a set of two or more corresponding batteries.

A yet further aspect of the invention is directed at the use of the battery or battery stack as mentioned hereinbefore for energy storage. This use regularly involves at least charging the battery or battery stack by applying an electrical current. The use may further or alternatively comprise discharging the battery or battery stack by connecting a device thereto, which consumes electrical energy stored in the battery.

A yet further aspect of the invention is directed at the use of the battery or battery stack as described above in a car, preferably an electrocar or hybrid car, a truck, preferably an electrotruck or hybrid truck, an aeroplane, a drone, a helicopter or a ship. In addition, the battery or battery stack can be used in any device where rechargeable batteries are currently used, including cell phones, computers, laptops and other handheld devices.

A yet further aspect of the invention is directed at a car, preferably an electrocar or hybrid car, a truck, preferably an electrotruck or hybrid truck, an aeroplane, a drone, a helicopter or a ship, which comprises a battery or battery stack as described above.

A yet further aspect of the invention is directed at the use of the battery or battery stack as described above in a stationary application; in such application the battery or battery starch is conventionally attached or connected to a stationary structure.

### Examples:

### Preparation of electrolytes

Two test electrolytes with concentrations of 0.1 M Mg[BH₄]₂ and 1.5 M/0.5 M Li[BH₄] solutions, respectively, were prepared in diglyme as follows: In an argon-filled glovebox, the respective amounts of Mg[BH₄]₂ (0.0216 g, 0.1 mol) and Li[BH₄] (0.132 g, 1.5 mol/0.044 g, 0.5 mol) were dissolved in 4 mL diglyme. A further test electrolyte was similarly prepared with 0.0108 g Mg[BH4]₂ (0.0500 mol) and 0.066 g Li[BH4] (0.75 mol). The respective mixtures were stirred at room temperature overnight, subsequently filtered through a glass fiber filter and stored over molecular sieves in the glovebox.

### Preparation of SPAN

Particulate sulfurated poly(acrylonitrile) composite (SPAN) was prepared via a two-step thermal reaction. First, 1.00 g of poly(acrylonitrile) (PAN) powder was mixed thoroughly with excess (ca. 15 g) sulfur powder in a high-temperature resistant quartz glass tube, which was heated to 150 °C under Ar to fully melt the sulfur, and subsequently the tube was cooled back to room temperature. After that, it was placed inside a furnace apparatus. The temperature of the oven was first increased to 150 °C within 30 minutes and then held at this temperature for 30 minutes. After that, the temperature was gradually increased to 550 °C in 2 hours and held at this temperature for 5 hours. After this treatment, the oven was cooled down over night with the quartz glass tube.

To remove excess (non-reacted) sulfur from the thus obtained product, the material was Soxhlet extracted using hot toluene at 150 °C for 2 days. The obtained SPAN compound was dried under vacuum overnight and then manually ground in order to reduce the particle size of the SPAN particles. To achieve a more homogeneous particle size distribution, the SPAN particles were sieved by a 63 µm sieve.

### Preparation of the cathode

The coated cathode was prepared with a weight ratio of SPAN: carbon black: binder of 70:15:15 and a solvent/SPAN weight ratio of 10:1. N-methyl-2-pyrrolidone (NMP) was used as the solvent SPAN. In the preparation, carbon black, binder and solvent were first mixed at 12,000 rpm for 30 minutes. Then, SPAN was added to the mixed solution and the mixture was mixed at 12,000 rpm for a further 30 minutes. Then the resulting slurry was coated on a graphite foil at a wet layer thickness of 200 µm, and the resulting coating was dried on a vacuum plate at 60 °C and under an air suction and subsequently in an oven. Then, a round chip with a diameter of 12 mm was punched out. The average sulfur content was 0.63 mg/cm² per cathode.

### Preparation of a test cell

Electrochemical cells were assembled in an Argon-filled glovebox using Swagelok-T-cells. The cells were composed of one Mg foil (12 mm diameter), one SPAN cathode (12 mm diameter) and two Whatman glass fiber separators. 100 µL of electrolyte was added onto each of the separator. The Mg foil was thoroughly scratched with a ceramic knife inside of the glovebox to remove the oxide layer.

The resulting cells were investigated for their cycle stability, charge and discharge curves and stress behavior. All electrochemical data was recorded by a BasyTec XCTS-LAB system.

### Example 1: Results of the investigation of the cycle stability of the 0.1 M Mg[BH₄]₂/ 1.5 M Li[BH₄]-cell:

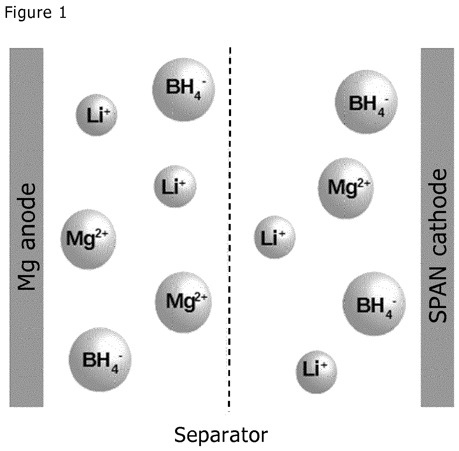

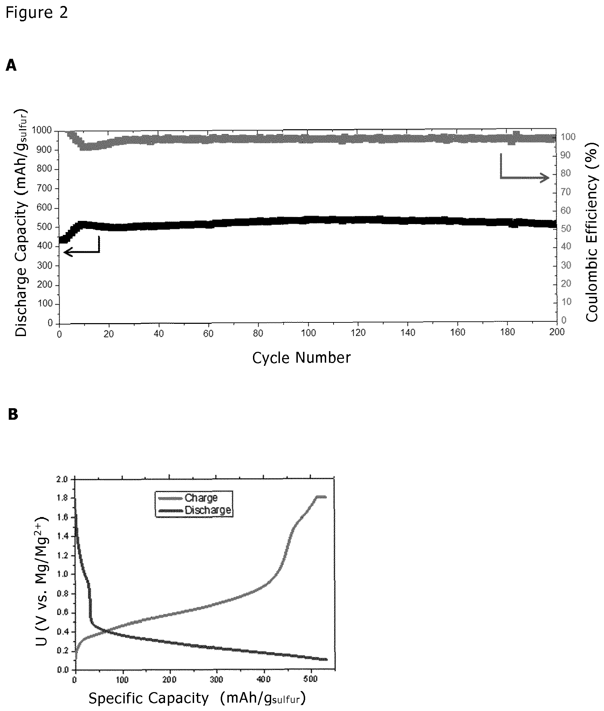

The investigated cell uses 0.1 M Mg[BH₄]₂ and 1.5 M Li[BH4] dissolved in diglyme as the electrolyte. The sulfur content of this cell was 0.6 mg/cm². The cell was cycled at 0.1 to 1.8 V at 0.1 C (i.e. full discharge of the cell in 0.1 h) at 23 °C. The results of the cycle stability are provided in Figure 2A.

As is apparent from Figure 2A, the Coulombic efficiency of the cell was stable at around 100% for more than 100 cycles. The discharge capacity of the cell was around 432 mAh/g_{sulfur} in the first cycle, then gradually increased to around 520 mAh/g_{sulfur} within the 10^{th} cycle and ten stayed constant for the following cycles. Figure 2B depicts the voltage profile of the cell for the 110th cycle.

SEM pictures taken from an aged Mg foil after 100 charge/discharge cycles showed a homogeneous deposition of magnesium on the surface. The deposits initially grow in sphere shapes, and as they become larger, they are compacted together.

### Example 2: Results of the investigation of the cycle stability at different charge/discharge rates:

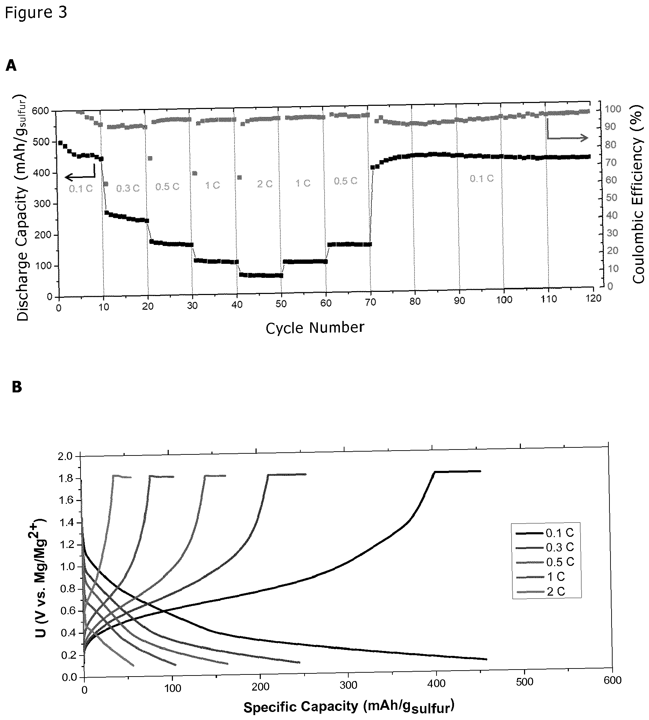

The investigated cell uses 0.1 M Mg[BH₄]₂ and 1.5 M Li[BH₄] dissolved in diglyme as the electrolyte. The cell was cycled at 0.1 to 1.8 V from 0.1 C to 2 C (i.e. full discharge of the cell in 0.1 h/2 h) and then back to 0.1 C all at 23 °C. The sulfur content of this cathode was 0.8 mg/cm². The results of these investigations are provided in figure 3A.

As is apparent from figure 3A, the cell delivered around 450, 250, 150, 100 and 50 mAh/g_{sulfur} at 0.1 C, 0.3 C, 0.5 C, 1 C and 2 C respectively. The capacity recovered back with the decrease in current rate, indicating a good rate capability of the system. Figure 3B depicts the voltage profile of the cell at the respective discharge rates.

### Example 3: Results of the investigation of the cycle stability at different charge/discharge rates for different electrolytes:

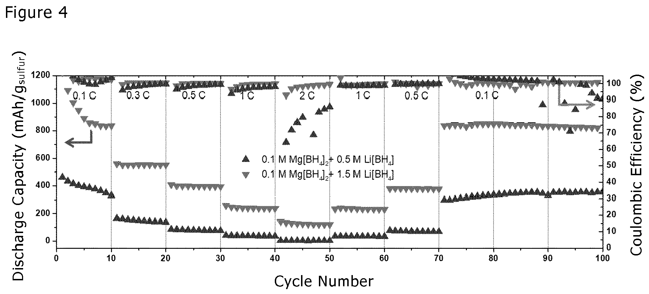

The investigated cells use 0.1 M Mg[BH₄]₂ and 1.5 M Li[BH4] (▼ in figure 4)/ 0.1 M Mg[BH₄]₂ and 0.5 M Li[BH₄] (▲ in figure 4) dissolved in diglyme as the electrolyte. The cells were cycled at 0.1 to 1.8 V from 0.1 C to 2 C (i.e. full discharge of the cell in 0.1 h/2 h) and then back to 0.1 C all at 28 °C. The sulfur contents of the cells were 0.55 and 0.58 mg/cm², respectively. The results of these investigations are provided in figure 4.

Using 0.1 M Mg[BH₄]₂ and 1.5 M Li[BH₄] dissolved in diglyme, the cell delivered around 800, 600, 400, 200, and 180 mAh/g_{sulfur} at 0.1 C, 0.3 C, 0.5 C, 1 C and 2 C respectively (T = 28 °C). With the 0.1 M Mg[BH₄]₂ / 0.5 M Li[BH₄] electrolyte, the cell delivered around 350, 200, 90, 80, and 20 mAh/g_{sulfur} at 0.1 C, 0.3 C, 0.5 C, 1 C and 2 C respectively. For all the cells, the capacity recovered back with the decrease in current rate, indicating a good rate capability of the system. Also, it was observed that a higher concentration of the Li[BH4] correlates with a higher discharge capacity of the system.

## Claims

1. Electrochemical cell comprising a magnesium anode, a cathode based on sulfurated poly(acrylonitrile) (SPAN), a separator and a halogen-free electrolyte comprising a non-halogen lithium salt and a non-halogen magnesium salt in a solvent, wherein the separator and the electrolyte is arranged between the cathode and the anode.

2. Electrochemical cell according to claim 1, **characterized in that** the anion of the non-halogen lithium salt and the non-halogen magnesium salt is independently selected from tetraakylborates and borohydrides of the type [BHR¹R²R³]⁻, wherein R¹, R² and R³ may be same or different and is selected from H, alkyl, preferably C₁₋₆-alkyl, or alkoxy, preferably C₁₋₆-alkoxy, or phenyl, more preferably, wherein R¹, R² and R³ are each H.

3. Electrochemical cell according to claim 1 or 2, **characterized in that** the magnesium anode is in form of a foil, bulk, pressed magnesium powder, Rieke magnesium, or mixtures of magnesium powder or Rieke magnesium with a carbonaceous material, preferably with one or more selected from carbon, graphite, graphene, graphene oxide or carbon black.

4. Electrochemical cell according to any one of claims 1 to 3, **characterized in that** the SPAN is fibrous SPAN, monolithic SPAN and/or pellicular SPAN.

5. Electrochemical cell according to claim 4, **characterized in that** the fibrous SPAN has fiber diameters in the range of 0.2 - 200 µm, preferably in the range of 10 - 50 µm, and more preferably in the range of 20 - 40 µm.

6. Electrochemical cell according to claim 4, **characterized in that** the pellicular SPAN has an average particle diameter of < 500 µm, preferably < 150 µm, and more preferably < 70 µm.

7. Electrochemical cell according to any one of the preceding claims, **characterized in that** the SPAN has a sulfur content of 35 - 60 wt.-%, preferably 40-45 wt.-%.

8. Electrochemical cell according to any one of the preceding claims, **characterized in that** the separator is a glass separator, a glass fiber separator or a polyolefin separator, wherein the polyolefin in the polyolefin separator is preferably poly(propylene) (PP).

9. Electrochemical cell according to any one of the preceding claims, **characterized in that** the solvent in the halogen-free electrolyte comprises an ether or polyether, preferably selected from one or more of 1,2-dimethoxyethane, diglyme, triglyme, tetraglyme, 1,3-dioxolane and 1,4-dioxane.

10. Electrochemical cell according to any one of the preceding claims, **characterized in that** the concentration of the non-halogen magnesium salt in the halogen-free electrolyte is in the range of 0.01 - 5 mol/L, preferably in the range of 0.05 - 0.2 mol/L.

11. Electrochemical cell according to any one of the preceding claims, **characterized in that** the concentration of non-halogen lithium salt in the halogen-free electrolyte is in the range of 0.01 - 5 mol/L, preferably in the range of 0.5 to 2.0 mol/L, more preferably about 1.5 mol/L.

12. A battery or battery stack comprising at least one electrochemical cell as claimed in claims 1 - 11.

13. Use of the battery or battery stack according to claim 12 for energy storage, wherein the battery or battery stack is electrically charged.

14. Use of the battery or battery stack according to claim 12 in an car, preferably an electrocar or hybrid car, a truck, preferably an electrotruck or hybrid truck, an aeroplane, a drone, a helicopter or a ship.

15. Use of the battery or battery stack according to claim 12 in a stationary application.
